# FASCICULE DE BREVET EUROPEEN

(11) **EP 0 505 284 B1**
(45) Date de publication et mention de la délivrance du brevet: **08.05.1996**
(21) Numéro de dépôt: 92400759.4
(22) Date de dépôt: 20.03.1992
(51) Int. Cl.: H04N 7/20, H04H 1/00

(54) **Installation de télécommunication par satellites apte à intéresser plusieurs zones de couverture**
Satellitentelekommunikationseinrichtung, die für mehrere Ausleuchtzonen verwendungsfähig ist
Satellite telecommunication installation applicable to several coverage zones

(30) Priorité: 22.03.1991 FR 9103509
(43) Date de publication de la demande: 23.09.1992
(73) Titulaire: ALCATEL ESPACE, F-92407 Courbevoie Cédex (FR)
(72) Inventeur: Rouffet, Denis, F-92100 Boulogne Billancourt (FR); Bailly, Alain, F-31520 Ramonville St Agne (FR); Boucheret, Gérard, F-31000 Toulouse (FR)
(74) Mandataire: Weinmiller, Jürgen

(56) Documents cités:
- ELECTRONIK vol. 34, no. 2, Janvier 1985, MUNICH, DE pages 117 - 124; H. HOFMANN ET AL.: 'AUFBAU UND FUNKTIONSWEISE VON KOMMUNIKATIONSSATELLITEN'
- IEEE COMMUNICATIONS MAGAZINE vol. 22, no. 3, Mars 1984, NEW YORK, US pages 26 - 34; R. G. GOULD: 'TRANSMISSION STANDARDS FOR DIRECT BROADCAST SATELLITES'
- IEEE TRANSACTIONS ON BROADCASTING vol. BC-28, no 4, Décembre 1982, NEW YORK, US pages 176 - 181; K. WAKI ET AL.: 'OPERATIONAL BROADCASTING SATELLITE IN JAPAN'

## Description

La présente invention se rapporte à une installation de télécommunication par satellites, cette installation étant apte à intéresser plusieurs zones de couverture terrienne distinctes. Elle s'applique en particulier au domaine de la télévision directe pour plusieurs zones géographiques de couverture.

Les satellites de télévision directe connus actuellement sont prévus pour arroser une zone de couverture terrienne déterminée avec un nombre de canaux déterminé et un taux de sécurité, ou redondance, satisfaisant.

Pour les standards de télévision actuels, de type D2-MAC par exemple, il est prévu un amplificateur à Tube à Ondes Progressives (T.O.P) par canal, cet amplificateur étant d'une puissance allant actuellement de 50 à 130 watts.

Dans ces conditions, un certain nombre d'amplificateurs de remplacement, fonctionnant en redondance, doit équiper le système pour pallier à une défaillance de l'un ou de l'autre de ces amplificateurs de puissance.

Il ne suffit cependant pas, aux yeux des utilisateurs, de prévoir un nombre suffisant d'amplificateurs (130 watts) de remplacement dans le satellite lui-même, car ce satellite peut lui-même tomber en panne pour diverses raisons.

Pour une parfaite sécurité, on est donc conduit à prévoir actuellement deux satellites aptes à arroser la zone de couverture par les mêmes canaux. Si par exemple un satellite doit relayer cinq programmes de télévision D2-MAC, il pourra comporter lui-même cinq amplificateurs à T.O.P. (de 130 watts par canal), et il lui sera adjoint un autre satellite de secours comportant lui aussi cinq amplificateurs à T.O.P. (de 130 watts).

Lors du lancement d'un satellite de télévision directe effectué à l'heure actuelle, il est pratiquement indispensable, pour rentabiliser ce satellite non seulement maintenant, mais aussi dans les quelques années à venir, que celui-ci soit apte à relayer les émissions de Télévision Haute-Définition que l'on envisage très sérieusement de mettre prochainement sur le marché.

La difficulté réside alors dans le fait que cette future Télévision Haute-Définition nécessite d'avoir, dans le satellite répéteur, des amplificateurs de puissance très supérieure à ceux actuellement utilisés. Par exemple, un canal en standard HD-MAC nécessitera à l'avenir un amplificateur de 230 watts là où actuellement un amplificateur de 130 watts est suffisant pour un canal en standard D2-MAC.

La solution actuellement conseillée consiste à équiper les satellites, actuellement destinés aux canaux D2-MAC, avec des amplificateurs surdimensionnés pour être aptes à transmettre dans le futur des canaux en standard HD-MAC.

En reprenant les données numériques précédentes, ceci signifie qu'il faut prévoir, pour une zone de couverture, deux satellites comportant chacun cinq amplificateurs à T.O.P. de 230 watts.

Pour couvrir deux zones distinctes, il faut donc, dans ce concept actuel, prévoir en tout jusqu'à quatre satellites surdimensionnés de ce type. Cette solution a pour inconvénient de représenter un investissement très lourd, réalisé en vue d'un marché futur et à caractère on ne peut plus hypothétique, car l'on ne sait pas à l'heure actuelle si vraiment et quand la Télévision Haute Définition va être mise sur le marché.

L'invention vise à remédier à cet inconvénient en proposant une solution plus simple et plus économique, basée sur l'utilisation d'un système à caractère évolutif en fonction des besoins du marché, adapté au départ pratiquement uniquement aux besoins du marché actuel et capable d'évoluer ensuite au fur et à mesure des besoins futurs dûs en particulier à une introduction, progressive ou non, de la Télévision Haute Définition. Elle se rapporte à cet effet à une installation de télécommunications par satellites répéteurs géostationaires, en particulier à une installation de télévision directe, apte à intéresser au moins deux zones de couverture terrienne T1,T2 destinées à recevoir chacune des canaux d'émission déterminés et pouvant être de deux types :
. soit d'un premier type, par exemple télévision D2-MAC, nécessitant, sur un satellite, un amplificateur de moyenne puissance par canal, par exemple 130 watts;
. soit d'un deuxième type, par exemple télévision HD-MAC nécessitant pour sa part un amplificateur par canal de puissance pouvant être presque deux fois supérieure, par exemple 230 watts;
seuls essentiellement les canaux du premier type étant prévus au départ, et cette installation qui est à caractère évolutif, comportant au départ au moins deux satellites répéteurs S1,S2, identiques et aptes chacun à couvrir, par des faisceaux multiples, chacune de ces zones T1,T2, ces deux satellites identiques étant équipés ensemble d'un nombre d'amplificateurs de moyenne puissance, soit 130 watts dans l'exemple précité, suffisant pour alors assurer la redondance souhaitée en matière de canaux, d'amplificateurs, et de satellites, des moyens étant prévus sur chaque satellite pour coupler ultérieurement en parallèle au moins deux amplificateurs de moyenne puissance (130 watts) à chaque fois que l'on désirera mettre en route un canal du deuxième type (HD-MAC dans l'exemple précité), et pour, lorsqu'en particulier les nécessités de redondance l'exigeront alors, mettre en orbite à chaque fois au moins un satellite supplémentaire S3, identique aux premiers S1,S2 et donc apte lui aussi à arroser chacune de ces zones de couverture T1,T2.

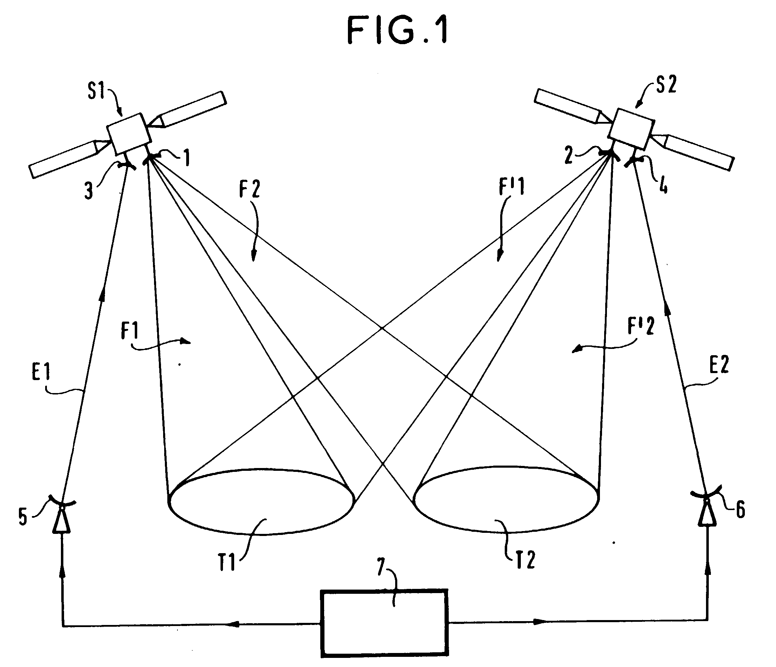

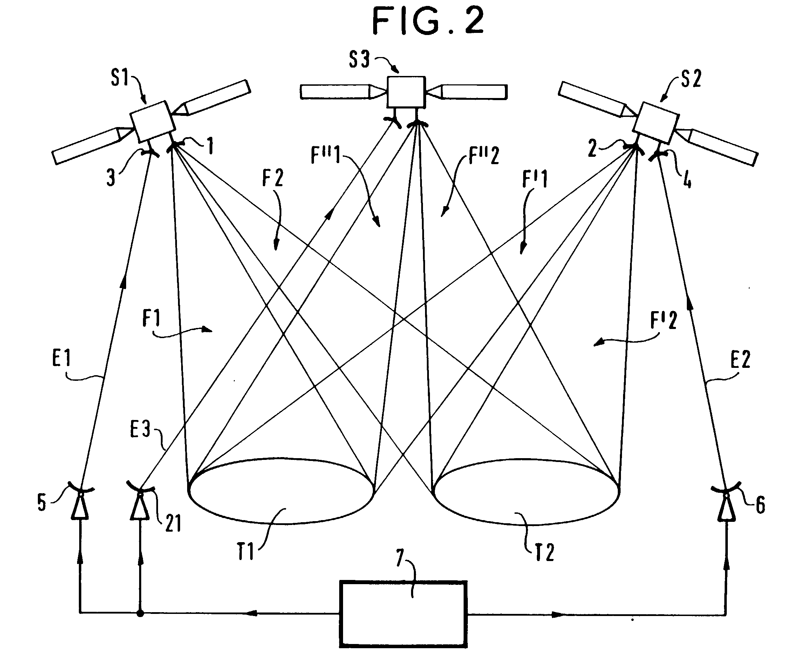

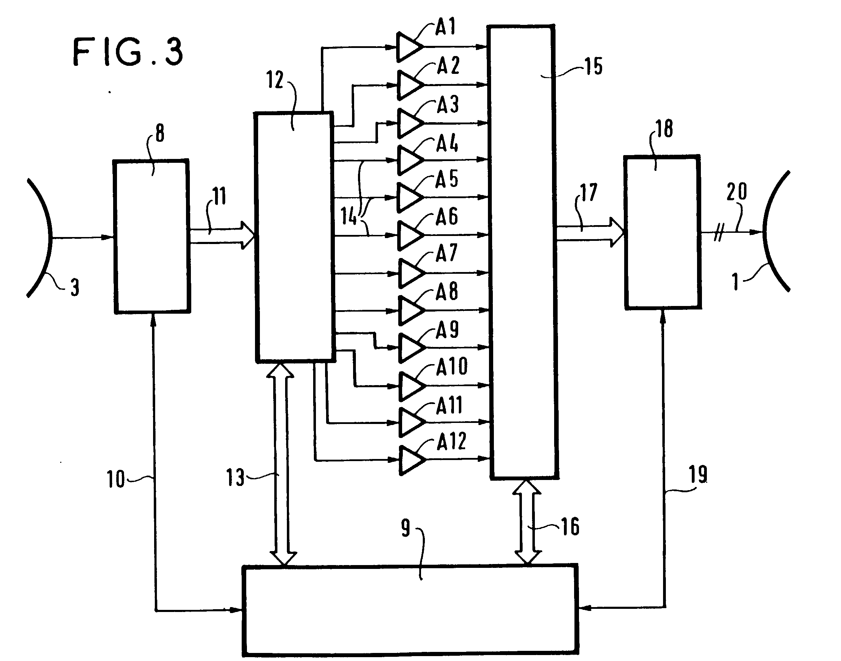

De toute façon, l'invention sera bien comprise, et ses avantages et autres caractéristiques ressortiront, lors de la description suivante d'un exemple non limitatif de réalisation, en référence au dessin schématique annexé dans lequel :
. Figure 1 est une configuration de cette installation en début de vie;
. Figure 2 est une configuration de cette même installation en fin de vie; et
. Figure 3 est un schéma électronique, synoptique et très rudimentaire, de l'un des satellites équipant cette installation.

En se reportant à la figure 1, il s'agit d'une installation de télévision directe apte à "arroser" deux zones distinctes de couverture terrienne T1 et T2. La zone T1 doit recevoir en début de vie par exemple cinq émissions de télévision distinctes correspondant à cinq premiers canaux en standard D2-MAC C1 à C5, tandis que la zone T2 doit recevoir cinq autres émissions distinctes correspondant à cinq seconds canaux C6 à C10 en standard D2-MAC.

Dans cet exemple, la redondance minimale exigée par les utilisateurs est :
. d'un canal pour chaque canal;
. d'un amplificateur de puissance pour chaque amplificateur de puissance; et
. d'un satellite pour chaque satellite.

Pour satisfaire ces exigences, l'installation de début de vie de la figure 1 comporte, selon un exemple nullement figé, deux satellites répéteurs géostationnaires S1 et S2, qui sont identiques et dont les antennes de réémission respectives 1 et 2 sont des antennes qui possèdent chacune deux zones de couverture (T1 et T2) sur deux accès distincts, et qui peuvent par suite réémettre chacune deux faisceaux distincts :
. l'antenne 1 du satellite S1 : un faisceau F1 vers la zone terrienne T1 et un faisceau F2 vers la zone terrienne T2; et
. l'antenne 2 du satellite S2 : un faisceau F'1 vers la zone T1 et un faisceau F'2 vers la zone T2.

Chaque satellite S1 et S2 est équipé d'une antenne de réception, respectivement 3 et 4, qui reçoit une onde multiplexée, respectivement E1 et E2 émise par une antenne au sol, respectivement 5 et 6, reliée à la station terrestre d'émission 7.

Dans la configuration de départ représentée en figure 1, chaque satellite est équipé de douze amplificateurs à T.O.P. de chacun 130 watts, suffisant chacun pour un canal en standard D2-MAC, et dont, pour le satellite S1 :
. cinq sont utilisés en permanence pour arroser, selon le faisceau F1, la zone de couverture T1 par les cinq émissions correspondant aux cinq canaux C1 à C5 précités;
. cinq autres sont utilisés, selon le faisceau F2, comme canaux de secours pour la zone T2, et peuvent donc réémettre l'un ou l'autre, ou l'ensemble, des cinq canaux C6 à C10 qui correspondent aux cinq émissions destinées à cette zone de couverture T2;
. les deux derniers, qui pourraient être omis dans une autre configuration mais qui ont un grand intérêt en début ou en milieu de vie comme on le verra ci-après, peuvent être utilisés en redondance de tubes ou de canaux pour suppléer à une défaillance dans le faisceau F1 ou même dans le faisceau de secours F2.

De manière symétrique, le faisceau F′2 du satellite S2 contient les cinq émissions de canaux C6 àC10 destinées à la zone T2, tandis que le faisceau F′1 contient les cinq canaux de secours pour la zone T1.

A ce stade, toutes les redondances souhaitées sont satisfaites aussi bien du point de vue des T.O.P. et canaux que des satellites, puisque si l'un des satellites S1 ou S2 tombe en panne, les zones T1 et T2 continuent à être arrosées, en attendant la réparation ou le lancement d'un satellite de remplacement, par l'autre satellite S2 ou S1. Dans un tel cas, le fait d'avoir douze amplificateurs au lieu de dix par satellite permet même de maintenir un certain taux de redondance de tubes ou canaux.

Par ailleurs, comme on le verra maintenant à l'examen de la figure 3, chaque satellite est conçu pour que puissent être réalisés en vol des couplages en parallèle d'amplificateurs deux à deux, chaque couplage de ce type permettant, à partir de deux amplificateurs de 130 watts chacun, d'obtenir un seul amplificateur de plus de 230 watts, donc capable d'amplifier un signal de canal télévision en standard haute-définition HD-MAC.

On reconnaît sur cette figure 3 l'antenne de réception 3 du satellite S1, ainsi que son antenne de réémission 1 à deux couvertures et accès distincts.

Le signal capté par l'antenne 3 est traité par un dispositif 8 de réception, transposition, et démultiplexage, qui est relié à l'organe central 9 de commande du satellite par une liaison bi-directionnelle 10.

Le dispositif 8 est relié, par la liaison multiple 11, à un organe 12 de commutation, réglage de phases et d'amplitudes, ainsi que de couplage deux à deux et de pré-amplification, qui est lui-même relié à l'organe central de commande 9 par une liaison multiple bidirectionnelle 13.

Les douzes sorties 14 de cet organe 12 sont reliées aux entrées des douze amplificateurs A1 à A12, à T.O.P. de chacun 130 watts, dont les sorties respectives sont connectées à un dispositif 15 de mesure de phases et d'amplitudes, ainsi que de couplage deux à deux, qui est lui-même relié à l'organe central de commande 9 par une liaison bi-directionnelle multiple 16.

Les signaux, couplés deux-à-deux ou non, en sortie du dispositif 15 sont appliqués, via la liaison multiple 17, au multiplexeur 18 qui est d'une part relié à l'organe central 9 par une liaison bi-directionnelle 19 et d'autre part relié à l'antenne d'émission bi-faisceau 1 par la double-liaison 20,

En vol, l'organe central 9 reçoit, de la station au sol, des ordres de couplage et/ou de commutation des amplificateurs A1 à A12. En cas de simple commutation, pour remplacer par exemple un amplificateur défaillant par un autre, il commande simplement, via la liaison 13, la commutation d'interrupteurs hyperfréquence compris dans le dispositif 12. En cas de demande de couplage en parallèle de deux amplificateurs (pour obtenir un amplificateur forte puissance apte à fonctionner pour une émission en standard HD-MAC), il mesure, par le circuit 15 et la liaison 16, les relations de phases et d'amplitudes en sortie de ces deux amplificateurs, et réalise en conséquence, dans le circuit 12 et via la liaison 13, les règlages de phases et d'amplitudes d'entrée aptes à permettre le couplage en parallèle de ces deux amplificateurs.

En revenant maintenant à la figure 1, il est supposé que l'on veuille progressivement émettre, en direction des zones T1 et T2, chacune des cinq émissions destinées respectivement à ces zones, en standard haute-définition HD-MAC selon des canaux C′1 à C′10, au lieu de les émettre en standard D2-MAC comme au départ selon les canaux C1 à C10.

Le remplacement des canaux C1 dans le faisceau F1 et C6 dans le faisceau F′2 par les canaux haute-définition correspondants C′1 et C′6 se fait très simplement en couplant, dans chaque satellite, le onzieme et le douzième amplificateur (A11 et A12 dans le satellite S1 de la figure 3) respectivement sur l'amplificateur (A1 et A6 pour le satellite S1) qui correspondait jusqu'alors au canal à remplacer, respectivement le canal normalement émis et le canal de secours pour l'autre zone. On obtient ainsi, par une simple opération de couplage, une structure à deux zones couvertes respectivement, avec la redondance souhaitée satisfaite à tous points de vue, chacune par quatre émissions en standard classique D2-MAC et une émission en standard nouveau HD-MAC.

Pour aller alors de l'avant, c'est à dire remplacer dans chaque zone une autre émission en standard ancien D2-MAC par une émission en standard nouveau HD-MAC, il est alors nécessaire, selon Figure 3 et du moins si l'on veut respecter les mêmes redondances, de lancer une troisième satellite S3, identique aux satellites S1 et S2 déjà en orbite, alimenté par une antenne d'émission au sol 21 selon une onde E3 et apte à réémettre deux faisceaux F˝1 et F˝2 en direction des zones T1 et T2. Ces deux faisceaux F˝1 et F˝2 seront par exemple utilisés pour être porteurs de canaux de secours, mais toutes les configurations seront bien entendu possibles, pourvu que les conditions de redondance souhaitées par les utilisateurs soient finalement respectées.

En fin de vie par exemple, et de manière nullement limitative, l'installation selon Figure 3 n'émettra que des émissions HD-MAC à haute-définition, et par exemple :
. le faisceau F1 sera porteur de deux canaux d'émission vers la zone T1;
. le faisceau F2 portera trois canaux d'émission vers la zone T2;
. le faisceau F′1 portera trois canaux d'émission vers la zone T1;
. le faisceau F′2 portera deux canaux d'émission vers la zone T2;
. les faisceaux F˝1 et F˝2 ne porteront que des canaux de secours, par exemple trois chacun;
. l'amplificateur forte puissance restant sur chacun des satellites S1 et S2 sera alors un amplificateur ou canal de secours.

Bien entendu, ces répartitions seront, en cours de vie, remaniées sous commande de la station terrestre 7 en fonction des incidents et des besoins.

Comme il va de soi, l'invention n'est pas limitée à l'exemple de réalisation qui vient d'être décrit, et en particulier le nombre de zones de couverture terrienne, de faisceaux réémis par satellite, d'amplificateurs et canaux de début et de fin de vie, et de satellites en début et fin de vie, n'est nullement limité et sera adapté aux exigences requises.

## Revendications

1. Installation de télécommunications par satellites (S1, S2,...), en particulier pour la télévision directe, cette installation étant apte à intéresser au moins deux zones (T1, T2) de couverture terrienne prévues pour recevoir chacune des canaux d'émission déterminés et pouvant être de deux types :
. soit d'un premier type nécessitant, sur le satellite, un amplificateur (A1, ou A2, ... ou A12) de moyenne puissance par canal,
. soit d'un deuxième type nécessitant, sur le satellite et par canal, un amplificateur de plus forte puissance, pouvant être presque deux fois supérieure,
et seuls essentiellement les canaux du premier type étant prévus au départ,
caractérisée en ce qu'elle est à caractère évolutif et comporte au départ au moins deux satellites (S1, S2) identiques et aptes chacun à couvrir, par des faisceaux multiples (F1, F2, F′1, F′2), chacune de ces zones (T1, T2), ces deux satellites identiques (S1, S2) étant équipés ensemble d'un nombre d'amplificateurs de moyenne puissance (A1, A2,...A12) suffisant pour assurer la redondance souhaitée en canaux, amplificateurs, et satellites, des moyens (9, 15, 12) étant prévus sur chaque satellite pour coupler ultérieurement, a chaque fois que l'on désirera mettre en route un canal du deuxième type, au moins deux amplificateurs (A1, A2) de moyenne puissance.

2. Installation selon la revendication 1, caractérisée en ce que lorsque les exigences de redondance le rendront nécessaire, au moins un satellite supplémentaire (S3), identique aux premiers (S1, S2) et donc apte lui aussi à arroser ces zones de couverture (T1, T2), est adjoint à l'installation.

3. Installation selon la revendication 1 ou la revendication 2, caractérisée en ce que lesdits moyens (9, 15, 12) sont prévus pour permettre, à chaque satellite (S1, S2, S3) de réémettre dans chacun de ses faisceaux multiples (F1, F2, F′1, F′2, F˝1, F˝2), indifféremment et en fonction des besoins, des canaux d'émission déterminés ou des canaux de secours déterminés vers l'une ou l'autre de ces zones de couverture (T1, T2).

4. Installation selon l'une quelconque des revendications 1 à 3, caractérisée en ce que les satellites (S1, S2,...) comportent chacun un nombre d'amplificateurs moyenne puissance (A1, A2,...A12) qui est supérieur au double du nombre de canaux d'émission intéressant ces zones (T1, T2), de sorte qu'il n'est pas immédiatement indispenable, en cas d'introduction progressive des canaux du deuxième type, de lancer un satellite supplémentaire (S3).

## Patentansprüche

1. Nachrichtentechnische Anlage mit Satelliten (S1, S2, ..), insbesondere für das direkte Fernsehen, wobei diese Anlage in der Lage ist, mindestens zwei Zonen (T1, T2) auf der Erde mit je bestimmten Sendekanälen zu bedienen, die von zwei unterschiedlichen Typen sein können:
. entweder von einem ersten Typ, der auf dem Satelliten einen Verstärker (A1, oder A2, ... oder A12) mittlerer Leistung je Kanal erfordert,
. oder von einem zweiten Typ, der auf dem Satelliten und je Kanal einen Verstärker größerer Leistung erfordert, die nahezu zweimal so groß sein kann, wobei zu Anfang nur die Kanäle des ersten Typs im wesentlichen vorgesehen sind, dadurch gekennzeichnet, daß die Anlage entwicklungsfähig ist und zu Beginn mindestens zwei identische Satelliten (S1, S2) besitzt, die je durch Mehrfachstrahlen (F1, F2, F'1, F'2) jede dieser Zonen (T1 und T2) bedienen können und die eine Anzahl von Verstärkern mittlerer Leistung (A1, A2, ..., A12) besitzen, die für die gewünschte Redundanz an Kanälen, Verstärkern und Satelliten ausreicht, wobei Mittel (9, 15, 12) auf jedem Satelliten vorgesehen sind, um später, sobald ein Kanal der zweiten Art in Betrieb genommen werden soll, mindestens zwei Verstärker (A1, A2) mittlerer Leistung zu koppeln.

2. Anlage nach Anspruch 1, dadurch gekennzeichnet, daß, wenn die Redundanzbedingungen dies erfordern, mindestens ein zusätzlicher Satellit (S3) der Anlage hinzugesellt wird, der den beiden ersten Satelliten (S1, S2) gleicht und somit auch in der Lage ist, die geographischen Zonen (T1 und T2) zu bedienen.

3. Anlage nach Anspruch 1 oder 2, dadurch gekennzeichnet, daß die Mittel (9, 15, 12) so ausgebildet sind, daß jeder Satellit (S1, S2, S3) in jedem seiner mehreren Strahlen (F1, F2, F'1, F'2, F"1, F"2) unterschiedslos und abhängig von den Bedürfnissen bestimmte Sendekanäle oder bestimmte Ersatzkanäle zur einen oder anderen der beiden geographischen Zonen (T1, T2) aussenden kann.

4. Anlage nach einem beliebigen der Ansprüche 1 bis 3, dadurch gekennzeichnet, daß die Satelliten (S1, S2, ...) je eine Anzahl von Verstärkern (A1, A2, .. A12) besitzen, die größer als das Doppelte der Anzahl von diese Zonen (T1, T2) interessierenden Sendekanälen ist, so daß bei der progressiven Einführung der Kanäle des zweiten Typs nicht unbedingt sofort ein zusätzlicher Satellit (S3) in Umlauf gebracht werden muß.

## Claims

1. A satellite telecommunications facility (S1, S2, ...), in particular for direct television broadcasting, the facility being capable of covering at least two Earth coverage areas (T1, T2) each of which is intended to receive determined transmission channels which may be of two types:
either a first type requiring, on the satellite, one medium-power amplifier (A1, or A2, ..., or A12) per channel;
or a second type requiring, on the satellite and per channel, one higher-power amplifier which may have nearly twice as much power;
and essentially only channels of the first type being provided to begin with;
said facility being characterized in that it can be modified and to begin with it includes at least two identical satellites (S1, S2) each of which is capable of covering each of the areas (T1, T2) by means of multiple beams (F1, F2, F'1, F'2), the two identical satellites (S1, S2) together being equipped with a sufficient number of medium-power amplifiers (A1, A2, ..., A12) to provide the desired redundancy as regards channels, amplifiers, and satellites, means (9, 15, 12) being provided on each satellite for subsequently coupling together at least two medium-power amplifiers (A1, A2) each time a channel of the second type is to be brought in.

2. A facility according to claim 1, characterized in that, when the redundancy requirements make it necessary, at least one additional satellite (S3) identical to the initial satellites (S1, S2) and therefore also capable of beaming to the coverage areas (T1, T2) is associated with the facility.

3. A facility according to claim 1 or 2, characterized in that said means (9, 15, 12) are provided to enable each satellite (S1, S2, S3) to retransmit determined transmission channels or determined backup channels within each of its multiple beams (F1, F2, F'1, F'2, F"1, F"2) to either coverage area (T1, T2) as a function of needs.

4. A facility according to any one of claims 1 to 3, characterized in that each of the satellites (S1, S2, ...) includes a number of medium-power amplifiers (A1, A2, ..., A12) that is greater than twice the number of transmission channels for each area (T1, T2), so that it is not immediately essential to launch an additional satellite (S3) in the event that channels of the second type are progressively introduced.
